# EUROPEAN PATENT APPLICATION

(11) **EP 3 628 421 A1**
(43) Date of publication of application: **01.04.2020**
(21) Application number: 19192300.2
(22) Date of filing: 19.08.2019
(51) Int. Cl.: B22F 3/105, B29C 64/153, B33Y 10/00, B33Y 30/00

(54) **ADDITIVE MANUFACTURING SYSTEMS AND METHOD**

(30) Priority: 27.09.2018 US 201816143931
(71) Applicant: The Boeing Company, Chicago, IL 60606-1596 (US)
(72) Inventor: Dobbs, James R., Chicago, 60606-1596 (US)
(74) Representative: Witte, Weller & Partner Patentanwälte mbB

(57) **Abstract**

An additive manufacturing system (100) includes a plate (102), a build support device (104), at least one electromagnetic energy source (106), and one or more processors (154). The plate (102) is at least semitransparent. The build support device (104) is movable relative to the plate (102) to move an object (118) into and out of contact with a stratum ()202 of a powder (116) distributed on a first side of the plate (102). The powder (116) includes metal particles. The one or more processors (154) control the at least one electromagnetic energy source (106) to emit one or more energy beams (304) that penetrate through the plate (102) and impinge upon a selected portion of the powder (116) in the stratum (202) upon exiting the plate (102) to form a layer of the object (118).

## Description

### FIELD OF THE DISCLOSURE

Embodiments of the present disclosure generally relate to additive manufacturing of three-dimensional objects.

### BACKGROUND

Additive manufacturing refers to any process for manufacturing a three-dimensional object in which successive layers of base material are deposited under computerized control. For example, the size and shape of the object may be based on a three-dimensional computer model or another electronic data source. Additive manufacturing can be used to fabricate objects that have complex structures and/or shapes. Additive manufacturing techniques for fabricating metal objects may be less labor intensive, may allow greater design freedom, and may yield more precise and repeatable finished products than conventional metal manufacturing techniques, such as die-casting, extruding, and the like.

At least one known additive manufacturing technique, which is referred to herein as selective laser melting (or sintering), builds a metal object within a powder bed including metal powder. For example, the object sits on a platform and is fully encased within the powder bed such that the top of the object is covered by a thin layer of metal powder. An energy source above the top of the object heats a selected portion of the thin layer of the metal powder to fuse the portion onto the top of the object, forming a new top layer of the object.

However, the metal object may experience substantial residual stresses and/or deformation during the manufacturing process due at least in part to large thermal gradients between different sections of the metal object. For example, the temperature at the top of the metal object where the new top layer is formed may be significantly greater than a section of the metal object closer to the bottom of the metal object, and the resulting residual stress can cause deformation and even crack formation in the metal object. Heating the lower section of the metal object that is within the powder bed to reduce the temperature gradient (and therefore reduce the residual stress) is impractical because the heat may cause the metal powder in the bed to fuse together and coalesce. The fused powder in the bed may have to be discarded instead of being reusable. For these reasons, attempting to heat the metal object in the powder bed greatly increases the amount of powder used (and wasted) during the additive manufacturing process relative to not heating the metal object in the bed.

The additive manufacturing techniques that build metal objects in powder beds have several other disadvantages in addition to the risk of deformation and/or cracking due to residual stress. For example, the size of the fabricated object is limited to the size of the tank that confines the powder and the amount of powder available. The production of relative large metal objects may require several tons of metal powder within the powder bed, which may be costly to obtain and maintain. Furthermore, because the temperature of the powder bed may be relatively cool (e.g., at or close to ambient temperature), the build speed may be limited because more time is necessary for the energy source to heat up and melt the metal powder onto the top layer of the metal object than if the metal object and/or the metal powder were maintained at a greater temperature. Varying the composition of the metal object that is being fabricated by changing the type of metal powder that is deposited in between successive layers is also difficult and potentially wasteful because intermixing of multiple different types of powders within the powder bed may contaminate the powders and require the entire powder bed to be discarded.

### SUMMARY OF THE DISCLOSURE

Certain embodiments of the present disclosure provide an additive manufacturing system that includes a plate, a build support device, at least one electromagnetic energy source, and one or more processors. The plate is at least semitransparent. The build support device is configured to couple to an object. The build support device is movable relative to the plate to move the object into and out of contact with a stratum of a powder distributed on a first side of the plate. The powder includes metal particles. The one or more processors are operably connected to the at least one electromagnetic energy source and configured to control the at least one electromagnetic energy source to emit one or more energy beams that penetrate through the plate and impinge upon a selected portion of the powder in the stratum upon exiting the plate to form a layer of the object.

Certain embodiments of the present disclosure provide a method for additive manufacturing that includes distributing a first stratum of a powder on a first side of a plate. The powder includes metal particles and the plate is at least semitransparent. The method includes moving an object towards the first side of the plate into contact with the first stratum of the powder. The method also includes directing one or more energy beams from at least one electromagnetic energy source to penetrate through the plate and impinge upon a first selected portion of the powder in the first stratum upon exiting the plate to form a first layer of the object.

Certain embodiments of the present disclosure provide an additive manufacturing system that includes a plate, a powder, a spreader, and at least one electromagnetic energy source. The plate is at least semitransparent. The powder includes metal particles, and is deposited on a top side of the plate. The spreader is mounted above the top side of the plate and is movable across the plate to disperse the powder into a stratum having a designated thickness. The at least one electromagnetic energy source is disposed below a bottom side of the plate that is opposite the top side. The at least one electromagnetic energy source is configured to emit one or more energy beams towards the plate such that the one or more energy beams penetrate through the plate and impinge upon a selected portion of the powder in the stratum upon exiting the plate to melt the selected portion of the powder and form a layer on an object that is held in contact with the stratum.

### BRIEF DESCRIPTION OF THE DRAWINGS

These and other features, aspects, and advantages of the present disclosure will become better understood when the following detailed description is read with reference to the accompanying drawings in which like numerals represent like parts throughout the drawings, wherein:
Figure 1 is a schematic cross-sectional view of an additive manufacturing system according to an embodiment.
Figure 2 is a perspective illustration of a portion of the additive manufacturing system including a plate and a spreader according to an embodiment.
Figure 3 illustrates a portion of the additive manufacturing system including the plate, the spreader, a build support device, and an electromagnetic energy source according to the embodiment shown in Figure 1.
Figure 4 illustrates the portion of the additive manufacturing system shown in Figure 3 during a stage of the build process of an object subsequent to the stage shown in Figure 3.
Figure 5 illustrates the portion of the additive manufacturing system shown in Figures 3 and 4 during a stage of the build process of the object subsequent to the stage shown in Figure 4.
Figure 6 illustrates the portion of the additive manufacturing system shown in Figures 3 through 5 during a stage of the build process of the object subsequent to the stage shown in Figure 5.
Figure 7 illustrates the portion of the additive manufacturing system shown in Figures 3 through 6 during a stage of the build process of the object subsequent to the stage shown in Figure 6.
Figure 8 illustrates the portion of the additive manufacturing system shown in Figures 3 through 7 during a stage of the build process of the object subsequent to the stage shown in Figure 7.
Figure 9 illustrates the portion of the additive manufacturing system shown in Figures 3 through 8 during a stage of the build process of the object subsequent to the stage shown in Figure 8.
Figure 10 is a flow chart of a method for additive manufacturing according to an embodiment of the present disclosure.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular property may include additional elements not having that property.

Embodiments of the present disclosure provide systems and a method for fabricating three-dimensional objects (e.g., work pieces, parts, products, etc.) via additive manufacturing. In one or more of the embodiments, the objects are metallic and are fabricated from a powder including metal particles. For example, the powder is heated or otherwise energized by one or more electromagnetic energy sources, which melts and/or fuses the energized powder onto a surface of the object. The energized powder that adheres to the object solidifies upon cooling to form a new layer of the object, and the process repeats layer by layer in series until the object is completed. The additive manufacturing systems described herein may be fully automated, such that the systems do not require operator intervention once a build operation is commenced. As described herein in more detail, the additive manufacturing systems of the present disclosure may be able to produce metal objects of various shapes and sizes with a reduced risk of distortion and/or cracks in the objects, reduced powder waste, reduced amount of powder required, and/or a faster build speed than known additive manufacturing systems designed to fabricate metal objects. The additive manufacturing systems may also have additional benefits over known additive manufacturing systems, as described herein.

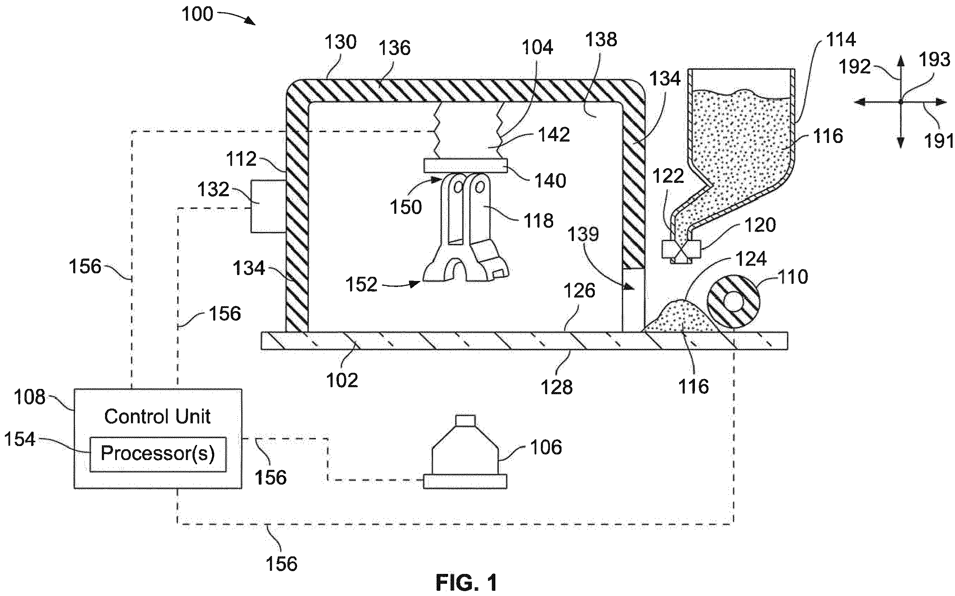

Figure 1 is a schematic cross-sectional view of an additive manufacturing system 100 according to an embodiment. The additive manufacturing system 100 (referred to herein as AM system 100) includes a plate 102, a build support device 104, at least one electromagnetic energy source 106, and a control unit 108. In the illustrated embodiment, the AM system 100 also includes a spreader 110, a heating appliance 112, and a powder reservoir 114. The powder reservoir 114 contains a supply of powder 116, which is a base material utilized by the AM system 100 to form a designated object 118. The powder 116 includes metal particles of one or more metals and/or metal alloys. The powder 116 optionally may also include non-metallic particles such as ceramic particles intermixed with the metal particles. The object 118 is a three-dimensional mass of material having a specific shape and size that corresponds to a computer design model (e.g., a computer-aided design (CAD) model) or another data source of computer-programmed instructions. The object 118 shown in Figure 1 may be a work piece that is only partially completed and at an intermediate stage of production.

The object 118 may be generated layer-by-layer in a successive sequence by the one or more electromagnetic energy sources 106 emitting electromagnetic energy beams that impinge upon a layer or stratum of the powder 116, causing a selected portion of the stratum to adhere to the object 118 and form a new layer of the object 118. The emission and direction of the electromagnetic energy beams are controlled by the control unit 108, which is operably connected to the one or more electromagnetic energy sources 106 via a wired or wireless communication pathway. The AM system 100 has one electromagnetic energy source 106 in the illustrated embodiment, but the AM system 100 may include multiple electromagnetic energy sources 106 arranged in an array or a line in another embodiment.

In one example, the powder 116 may be homogenous, including a single type of metal or metal alloy material without additional non-metallic filler particles (e.g., non-metallic filler materials). The metal or metal alloy material of the powder 116 may include various metal types, such as aluminum, stainless steel, copper, nickel, cobalt, titanium, or the like, and alloys of the various metal types. In another example, the powder 116 includes multiple different types of metals and/or metal alloys, with or without non-metallic filler materials. Possible non-metallic filler materials within the powder 116 may include ceramics, polymers, silica, or the like. The powder reservoir 114 that contains the powder 116 is able to selectively release specific quantities of the powder 116 onto the plate 102. The powder reservoir 114 includes a valve 120 along a spout 122 of the powder reservoir 114. The valve 120 is able to open and close to control the deposition of powder 116 from the powder reservoir 114. The valve 120 may be operable connected to the control unit 108, such that the control unit 108 may be selectively opened and closed in response to control signals received from the control unit 108. In Figure 1, a pile 124 of the powder 116 is disposed on a first side 126 of the plate 102 under the spout 122 of the powder reservoir 114. The pile 124 is poised for being dispersed and distributed along the first side 126 of the plate 102 in preparation for receiving electromagnetic energy beams emitted from the electromagnetic energy source 106.

The plate 102 is disposed between the electromagnetic energy source 106 and the object 118 that is being fabricated. The plate 102 has the first side 126 and a second side 128 opposite the first side 126. In the illustrated embodiment, the build support device 104, the heating appliance 112, the object 118, the spreader 110, and the powder reservoir 114 are located along the first side 126 of the plate 102 such that the first side 126 faces towards these components with or without the components mechanically contacting or engaging the first side 126. The electromagnetic energy source 106 is located along the opposite, second side 128 of the plate 102.

The AM system 100 is oriented with respect to a lateral axis 191, a height axis 192, and a longitudinal axis 193. The axes 191-193 are mutually perpendicular. The longitudinal axis 193 extends into and out of the page in the illustrated orientation. The axes 191-193 are not required to have any particular orientation with respect to gravity. In at least one embodiment, the height axis 192 extends in a vertical direction generally parallel to the force of gravity. For example, the first side 126 of the plate 102 in Figure 1 may be a top side of the plate 102 vertically facing upward, and the second side 128 of the plate 102 may be a bottom side vertically facing downward. The pile 124 of powder 116 is retained on the first or top side 126 of the plate 102 via gravitational force. For example, the weight of the powder 116 prevents the powder 116 from moving off of the plate 102.

The plate 102 is at least semitransparent, and may be fully transparent. The electromagnetic energy beams emitted from the electromagnetic energy source 106 penetrate through a thickness of the plate 102 before impinging upon a stratum of the powder 116 to fuse a selected portion of the powder 116 onto the object 118. The plate 102 is rigid. The first and second sides 126, 128 may be planar and parallel to one another. The plate 102 may be or include glass, alumina, polycarbonate, or the like. In a non-limiting example, the plate 102 is composed of single crystal sapphire (e.g., alumina) material.

The heating appliance 112 includes an enclosure 130 that at least partially surrounds the object 118 during the build process. The heating appliance 112 also includes a heating element 132 that generates thermal energy (i.e., heat) within the enclosure 130. The heating appliance 112 regulates the temperature of the object 118. For example, the heating appliance 112 may heat the object 118 during the build process such that an internal temperature of the object 118 is greater than an ambient, room temperature outside of the enclosure 130. The raised temperature of the object 118 may allow the powder 116 to more readily adhere to the object 118 than if the object 118 is not heated. For example, the portion of the powder 116 upon which the electromagnetic energy beams impinge may adhere to the heated object 118 more quickly and/or with less beam energy required than if the object 118 was not heated, which may enable faster and/or more efficient fabrication of the object 118.

The enclosure 130 may fully or only partially surround the object 118. The enclosure 130 in Figure 1 has several thermally insulated walls including two side walls 134, a ceiling 136 connected to and extending between the side walls 134, and a back wall 138 in the background that also extends between the side walls 134. The enclosure 130 may include a front wall that is cut off in the sectional view of Figure 1. The enclosure 130 engages the first side 126 of the plate 102 in the illustrated embodiment, such that the plate 102 defines a floor of the enclosure 130 to block heat from dissipating out of the enclosure 130. In an alternative embodiment, the enclosure 130 may be spaced apart from the plate 102. The enclosure 130 includes an opening 139 through the side wall 134 that is proximate to the powder reservoir 114. The opening 139 is sized to permit the spreader 110 to pass through the opening 139 into the enclosure 130 to distribute the powder 116 on the first side 126 of the plate 102 within the enclosure 130. In an alternative embodiment, the enclosure 130 may lack the opening 139. For example, the spreader 110 may be retained within the enclosure 130 throughout the build process without exiting the enclosure 130, or the enclosure 130 may be suspended a distance away from the plate 102 such that the spreader 110 passes between the enclosure 130 and the plate 102.

The heating element 132 may include electrically resistive elements that convert electrical energy (i.e., current) into thermal energy that is supplied into the enclosure 130. For example, heating element 132 may be conductively connected to a power source, such as a wall outlet via an electrical cable, to receive current for generating heat. The heating element 132 may include control circuitry and/or devices (e.g., switches, relays, etc.) that regulates the heat generated and supplied into the enclosure to control the temperature within the enclosure 130. The control unit 108 may be operably connected to the heating element 132 via a wired or wireless connection. The control unit 108 may communicate electrical signals to the heating element 132 to control the heating element 132 in order to maintain the temperature within the enclosure 130 and/or the internal temperature of the object 118 at a designated temperature or within a designated temperature range. For example, the designated temperature of the object 118 during the build process may be greater than 100 °F (56 °C), such as, but not limited to, 200 °F (111 °C), 300 °F (167 °C), or 500 °F (278 °C). The designated temperature may be selected to be below, but relatively close to, a melting temperature of the powder 116, such as within a designated range (e.g., within 100 °F or within 200 °F) of the melting temperature.

The build support device 104 is coupled to the object 118 and is movable relative to the plate 102 to reciprocally move the object 118 between a contact position and a separated position. In the separated position, the build support device 104 holds the object 118 spaced apart from the first side 126 of the plate 102. The object 118 is in the separated position in Figure 1. For example, the build support device 104 may lift and suspend the object 118 above the first (e.g., top) side 126 and any layer or stratum of powder 116 disposed on the first side 126. When the build support device 104 moves the object 118 to the contact position, the object 118 may engage the first side 126 of the plate 102 and/or a stratum of the powder 116 that is dispersed on the first side 126.

The build support device 104 may include a platform 140 that couples to the object 118 and a linear drive mechanism 142 that moves the platform 140 relative to the plate 102. The platform 140 removably couples to the object 118 via one or more of adhesive, fasteners (e.g., nuts and bolts, etc.) clips, latches, bands, hooks, or the like. The platform 140 is coupled to a proximal end 150 of the object 118 in the illustrated embodiment. The proximal end 150 of the object 118 is opposite to a distal end 152 of the object 118. The distal end 152 of the object 118 engages the first side 126 of the plate 102, or at least a stratum of powder 116 on the first side 126, when the object 118 is moved to the contact position. After the proximal end 150 of the object 118 is formed, the proximal end 150 does not engage the plate 102 or the powder 116 during the remainder of the build process. The location of the platform 140 at the separated position may be based on a threshold lower limit distance or spacing between the distal end 152 of the object 118 and the first side 126 of the plate 102. For example, the threshold lower limit distance may be at least slightly greater than a distance from the first side 126 to a top of the spreader 110, which ensures that the spreader 110 can pass between the object 118 and the plate 102 while the object 118 is in the separated position.

The linear drive mechanism 142 may include any suitable electro-mechanical motorized actuator and associated mechanical linkage. The linear drive mechanism 142 in the illustrated embodiment is coupled to the ceiling 136 of the enclosure 130. For example, the linear drive mechanism 142 extends from the ceiling 136 to the platform 140, and the build support device 104 is disposed within the enclosure 130 of the heating appliance 112. Alternatively, the linear drive mechanism 142 may be mounted to the side walls 134 of the enclosure 130 or may be unconnected to the enclosure 130. In an example alternative embodiment, the linear drive mechanism 142 may be connected directly to the plate 102 or may be mounted on a support structure (other than the enclosure 130).

The linear drive mechanism 142 of the build support device 104 is operably connected to the control unit 108 via a wired or wireless communication pathway. The control unit 108 communicates electrical signals to the linear drive mechanism 142 to control the positioning of the object 118 relative to the plate 102 during the build process. It is understood that the location of the platform 140 relative to the plate 102 and the heating appliance 112 when the object 118 is in the contact position may vary during the build process as the object 118 increases in size. For example, the platform 140 is closer to the plate 102 to achieve the contact position early in the build process when the object 118 is relatively small than later in the build process when the object 118 is larger. Similarly, the location of the platform 140 relative to the plate 102 and the heating appliance 112 when in the separated position may also vary during the build process as the object 118 enlarges.

The energy beams output from the electromagnetic energy source 106 have a sufficient amount of energy to promote melting and/or fusing of the powder 116 onto the distal end 152 of the object 118. The electromagnetic energy source 106 may be or include a laser beam generator, an electron beam generator, or the like. For example, in an embodiment in which the electromagnetic energy source 106 is a laser beam generator, the electromagnetic energy source 106 generates and emits laser beams that represent the energy beams. The laser beam generator may be a fiber laser in a non-limiting example. In an embodiment in which the electromagnetic energy source 106 is an electron beam generator, the electromagnetic energy source 106 generates and emits electron beams that represent the energy beams. The electron beam generator optionally may be a single crystalline cathode, multi-beam device. The electromagnetic energy source 106 optionally may also include one or more lenses, collimators, mirrors, and/or the like for directing the energy beams towards different selected areas of the plate 102. The electromagnetic energy source 106 is operably connected to the control unit 108 via a wired or wireless communication pathway. The control unit 108 communicates electrical signals to the electromagnetic energy source 106 to control the timing and intensity of energy beams that are generated and emitted during the build process, as well as to guide and direct the locations at which the energy beams impinge upon the powder 116 that is dispersed on the plate 102.

The control unit 108 includes one or more processors 154 that are configured to operate based on programmed instructions. The control unit 108 may include additional features or components, such as a data storage device (e.g., memory), an input/output (I/O) device, and/or a wireless communication device. The memory may store programmed instructions (i.e., software) that is dictates the functioning of the one or more processors 154. For example, the memory may store a data file, such as a CAD file, associated with the object 118 that is being fabricated. The control unit (e.g., the one or more processors 154 thereof) may control the operations of the electromagnetic energy source 106 based on the instructions in the data file to produce the object 118 as a replica of a digital object in the data file. The control unit 108 may also control one or more of the build support device 104, the heating appliance 112, spreader 110, and/or the valve 120 on the powder reservoir 114 during the build process. In Figure 1, the control unit 108 is conductively connected via electrical wires 156 to the electromagnetic energy source 106, the heating element 132 of the heating appliance 112, the spreader 110, and the build support device 104 to control the operations of these components. Although not shown, the control unit 108 may be conductive connected via wires to the valve 120 on the powder reservoir 114 to control the deposition of powder 116 onto the plate 102. Alternatively, the control unit 108 may wirelessly communicate with these components by transmitting wireless control signals using a transceiver, a transmitter, or the like, instead of conductively conveying control signals along the electrical wires 156.

Optionally, all or at least a subset of the components of the AM system 100 shown in Figure 1 may be contained within or mounted on a housing (not shown) to define a unitary additive manufacturing device. The housing may secure the electromagnetic energy source 106 in a fixed position relative to the plate 102. The additive manufacturing device may be sized to sit on a desk or on the floor.

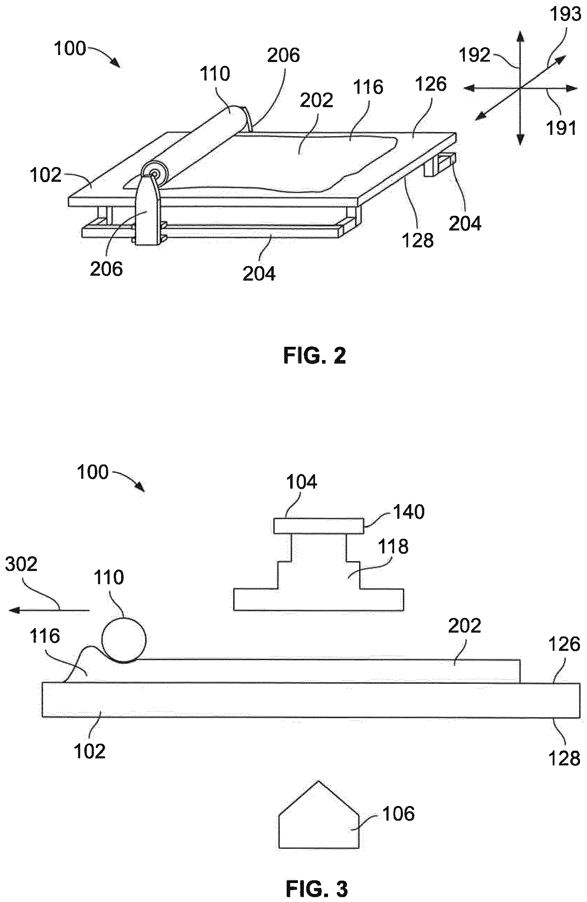

Figure 2 is a perspective illustration of a portion of the AM system 100 including the plate 102 and the spreader 110 according to an embodiment. The spreader 110 is movable across the plate 102 to spread and distribute the powder 116 on the first side 126 of the plate 102. The spreader 110 disperses the pile 124 (shown in Figure 1) across the plate 102 to form a stratum 202 or layer of powder. For example, the spreader 110 disperses the pile 124 by pushing and/or flattening the pile 124 to extend the surface area of the pile 124 into a designated shape, size, and/or thickness to form the stratum 202. The thickness of the stratum 202 may be uniform throughout the entire area of the stratum 202 or at least a majority of the area. The designated thickness of the stratum 202 may be relatively thin, such as less than 100 microns. In a non-limiting example, the spreader 110 may disperse the powder 116 to form a stratum 202 having a thickness of about 30 microns or about 60 microns. The spreader 110 may be adjustable along the height axis 192 relative to the first side 126 of the plate 102 to control the thickness of the resulting stratum 202.

In the illustrated embodiment, the spreader 110 is elongated along the longitudinal axis 193. The spreader 110 may be a cylindrical roller, a blade (e.g., a recoater blade), or the like. The spreader 110 moves relative to the plate 102 parallel to the lateral axis 191 to disperse and distribute the powder 116 into the stratum 202. Optionally, the spreader 110 is coupled to rails 204 that provide a track for the spreader 110 to move parallel to the lateral axis 191. The rails 204 are fixed in place relative to the plate 102, and optionally may engage the plate 102. For example, the rails 204 may be mounted to the second side 128 of the plate 102. The spreader 110 is coupled to the rails 204 via mounting arms 206. The mounting arms 206 and/or the rails 204 may include a motorized actuator that controls movement of the spreader 110 and the mounting arms 206 relative to the rails 204 and the plate 102.

Figure 3 illustrates a portion of the AM system 100 including the plate 102, the platform 140 of the build support device 104, the spreader 110, and the electromagnetic energy source 106 according to the embodiment shown in Figure 1. The illustration in Figure 3 shows the AM system 100 during an intermediate stage of a build process of the object 118, such that the object 118 in Figure 3 is unfinished and incomplete.

The illustration shown in Figure 3 may follow the stage shown in Figure 1. For example, after the pile 124 (shown in Figure 1) of the powder 116 is deposited on the first side 126 of the plate 102, the spreader 110 is controlled to move in a first direction 302 across the first side 126 of the plate 102 to distribute the powder 116 into the stratum 202. The thickness of the stratum 202 may be exaggerated in Figure 3 for descriptive purposes. For example, the stratum 202 may be relatively thin, such as less than 100 microns. The movement of the spreader 110 disperses the powder 116 on the first side 126 to have a relatively uniform thickness. The spreader 110 moves in the first direction 302 while the build support device 104 holds the object 118 in the separated position, which allows the spreader 110 to move between the object 118 and the plate 102 without the object 118 interfering with the movement of the spreader 110. As described above with reference to Figure 1, the control unit 108 (shown in Figure 1) may control the movement of the build support device 104 and the spreader 110 such that the build support device 104 remains in the separated position throughout the movement of the spreader 110 in the first direction 302 and then back in the opposite direction to a rest position of the spreader 110.

In the illustrated orientation, the build support device 104 lifts the object 118 above the plate 102, and the spreader 110 moves underneath the object 118 to disperse the powder 116 into the stratum 202 under the object 118. The stratum 202 is retained on the first (or top) side 126 of the plate 102 via gravitational force. The electromagnetic energy source 106 is disposed below the second (or bottom) side 128 of the plate 102. The plate 102 is disposed between the stratum 202 and the electromagnetic energy source 106, and the stratum 202 is disposed between the object 118 and the plate 102.

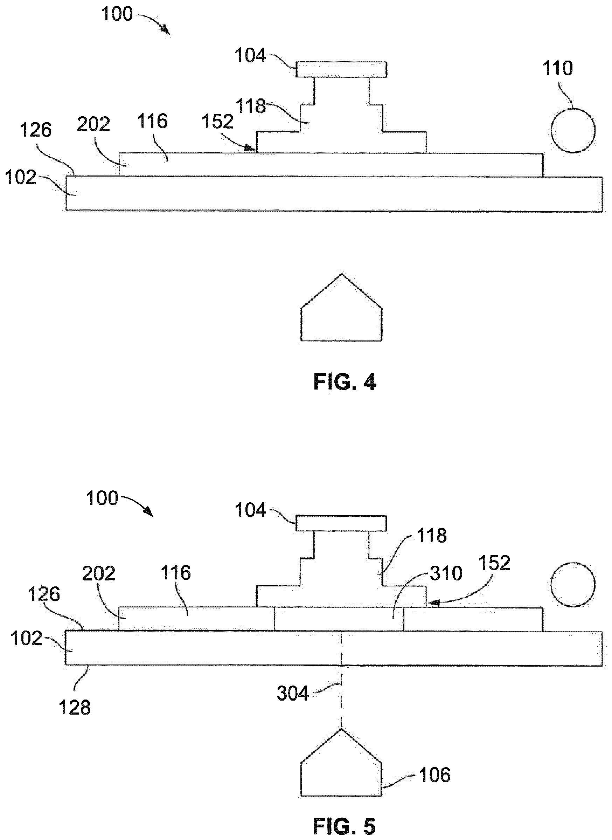

Figure 4 illustrates the portion of the AM system 100 shown in Figure 3 during a stage of the build process of the object 118 subsequent to the stage shown in Figure 3. The spreader 110 is shown in the rest position, and the build support device 104 is in the contact position. In an embodiment, after the spreader 110 disperses the powder 116 into the stratum 202 and returns to the rest position, the build support device 104 is controlled to move the object 118 from the separated position to the contact position. The build support device 104 moves towards the first side 126 of the plate 102 until the distal end 152 of the object 118 engages the stratum 202. The object 118 may achieve the contact position in response to the distal end 152 engaging the stratum 202. In the illustration orientation, the build support device 104 vertically lowers the object 118 onto the stratum 202. As described above, the movement of the build support device 104 may be controlled by the control unit 108 (shown in Figure 1), including the one or more processors 154 (Figure 1) thereof.

Figure 5 illustrates the portion of the AM system 100 shown in Figures 3 and 4 during a stage of the build process of the object 118 subsequent to the stage shown in Figure 4. After the build support device 104 moves the object 118 into engagement with the stratum 202, the electromagnetic energy source 106 is controlled to generate and emit one or more energy beams 304 towards the plate 102. The energy beams 304 may be laser beams or electron beams. The energy beams 304 are directed to penetrate the transparent or semitransparent plate 102 at predetermined locations. The energy beams 304 enter the plate 102 through the second side 128 and exit the plate 102 through the first side 126. The energy beams 304 pass through the plate 102 and impinge upon a selected portion 310 of the stratum 202 upon exiting the plate 102. The energy beams 304 melt and/or fuse the powder 116 in the selected portion 310 of the stratum 202, which causes the selected portion 310 to adhere to the distal end 152 of the object 118 to form a new layer of the object 118.

The one or more processors 154 of the control unit 108 (shown in Figure 1) control the emission and guidance of the energy beams 304 from the electromagnetic energy source 106. For example, the electromagnetic energy source 106 is only controlled to emit energy beams 304 while the build support device 104 holds the object 118 in contact with the stratum 202. The selected portion 310 of the stratum 202 that receives the energy beams 304 is determined based on a computer design model. For example, different layers of the object 118 may have different cross-sectional shapes and/or sizes according to the computer design model. The energy beams 304 may be guided to the selected portion 310 of the stratum 202 via the use of positionable optics, such as lenses, collimators, mirrors, and/or the like.

In one or more embodiments of the present disclosure, the object 118 is disposed within the enclosure 130 of the heating appliance 112 (shown in Figure 1) throughout the stages described with reference to Figures 3, 4, and 5. For example, an entirety (or at least a majority) of the object 118 may be disposed within the enclosure 130 (Figure 1) of the heating appliance 112. The object 118 may be heated by the heating appliance 112 to maintain the temperature of the object 118 at the designated temperature or within the designated temperature range that is greater than an ambient temperature surrounding the AM system 100. For example, the object 118 may be heated by the heating appliance 112 to have a raised temperature above the ambient temperature while the object 118 is moved towards the first side 126 of the plate 102, while the object 118 is in contact with the stratum 202, and while the energy beams 304 are emitted towards the selected portion 310 of the stratum 202. The designated temperature (or temperature range) may be less than, but relatively close to, a melting temperature of the material of the object 118. For example, if the melting point of the object 118 is

Because the entire (or at least most of the) mass of the object 118 is heated to the designated temperature, the object 118 does not experience significant thermal gradients between different parts of the object 118. For example, all parts of the object 118 may be within a small temperature range, such as within 2 °F, 5 °F, 10 °F, or the like, of each other during the manufacturing process. Because the temperature at the distal end 152 of the object 118 that is fused to the selected portion 310 of the stratum 202 is similar to (e.g., within the small temperature range of) the temperature at the proximal end 150 of the object 118, the object 118 does not experience internal residual stress and/or deformation during the manufacturing process attributable to thermal gradients. Due to methodology of the manufacturing process described herein and the relatively uniform heating of the object 118, the AM system 100 described herein is able to accurately and consistently produce metal-containing parts with reduced risk of cracks, deformations, and the like relative to known additive manufacturing systems.

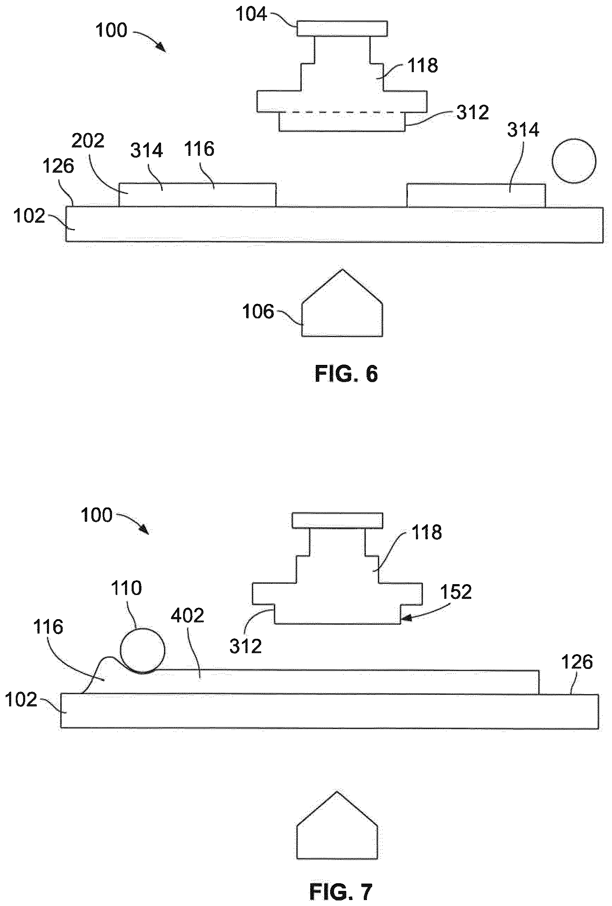

Figure 6 illustrates the portion of the AM system 100 shown in Figures 3 through 5 during a stage of the build process of the object 118 subsequent to the stage shown in Figure 5. After the selected portion 310 of the stratum 202 is fused to the object 118, the electromagnetic energy source 106 is controlled to cease emission of the energy beams 304. Thereafter, the build support device 104 is controlled to move the object 118 away from the plate 102 to the separated position. The powder 116 that was fused onto the object 118 to form the new layer 312 on the object 118 is separated from a remaining portion 314 of the powder 116 on the plate 102. The remaining portion 314 represents the powder 116 in the stratum 202 that was not selected and was not fused onto the object 118 by the energy beams 304. It is understood that the dashed line separating the new layer 312 from the previous distal end of the object 118 is included in Figure 6 solely for descriptive purposes and does not imply the presence of any physical separation or seam between successive layers of the object 118. The layer 312 may cool and solidify while exposed to additional air flow in the separated position.

After moving the object 118 away from the plate 102, the remaining portion 314 of the powder 116 in the stratum 202 optionally may be cleared from the plate 102. For example, the powder 116 may be swept, blown, sucked, or otherwise moved into a collection reservoir (not shown) for reuse or disposal of the powder 116. After removing the remaining portion 314 of the stratum 202, another stratum of powder can be deposited and distributed onto the first side 126 of the plate 102 to prepare for application of a successive layer of the object 118. Alternatively, the remaining portion 314 of the preceding stratum 202 may not be removed from the first side 126 of the plate 102 before depositing additional powder to form the subsequent stratum. For example, the new powder may mix with the remaining portion 314 to define the subsequent stratum.

Figure 7 illustrates the portion of the AM system 100 shown in Figures 3 through 6 during a stage of the build process of the object 118 subsequent to the stage shown in Figure 6. Figure 7 shows that the spreader 110 is controlled to disperse a subsequent, second stratum 402 of powder 116 onto the first side 126 of the plate 102 while the object 118 remains in the separated (e.g., lifted) position. The stage in Figure 7 is similar to the stage shown in Figure 3 except that the object 118 has the new layer 312 in Figure 7 which defines the distal end 152 of the object 118. Optionally, the powder 116 that is dispersed to form the second stratum 402 may be the same type of powder as the powder 116 shown in Figures 1 through 6. Alternatively, the powder 116 that is dispersed into the second stratum 402 may be a different powder (e.g., different type of powder) than the powder 116 that formed the preceding stratum 202 (also referred to herein as first stratum 202). For example, the AM system 100 may enable grading (e.g., varying the material composition of the object 118) among different layers by altering the composition of the stratums. The AM system 100 may reduce the amount of wasted powder when grading over known additive manufacturing systems that utilize powder beds. For example, even if the remaining portions of the powder in the stratums is disposed after each layer is applied to the object 118, the quantity of powder in the remaining portions is much less than the quantity of powder that is wasted when changing and/or mixing the powders in a powder bed.

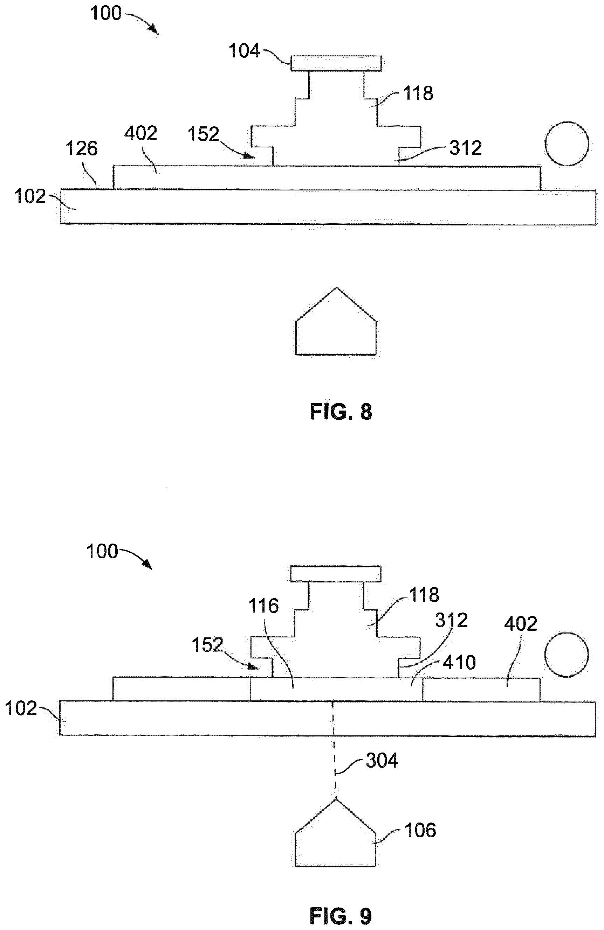

Figure 8 illustrates the portion of the AM system 100 shown in Figures 3 through 7 during a stage of the build process of the object 118 subsequent to the stage shown in Figure 7. After distributing the second stratum 402 on the plate 102, the build support device 104 is again controlled to move the object 118 towards the first side 126 of the plate 102 until the distal end 152 of the object 118 (defined by the newly added layer 312) contacts the second stratum 402. Figure 9 illustrates the portion of the AM system 100 shown in Figures 3 through 8 during a stage of the build process of the object 118 subsequent to the stage shown in Figure 8. Once the distal end 152 of the object 118 is in contact with the second stratum 402, the electromagnetic energy source 106 is controlled to again generate and emit one or more energy beams 304 towards the plate 102. As described above with reference to Figure 5, the energy beams 304 are directed to penetrate the plate 102 and impinge upon a selected portion 410 of the powder 116 in the second stratum 402. The selected portion 410 may have a different cross-sectional size and/or shape than the selected portion 310 of the first stratum 202 shown in Figure 5. The powder 116 in the selected portion 410 melts and/or fuses onto the preceding layer 312 of the object 118 to form a new layer of the object 118, as described above. For example, the build process may repeat such that each successive (e.g., additional layer) of the object 118 is formed upon a preceding layer to gradually form a solid mass of metal-containing material that defines the finished or completed object 118.

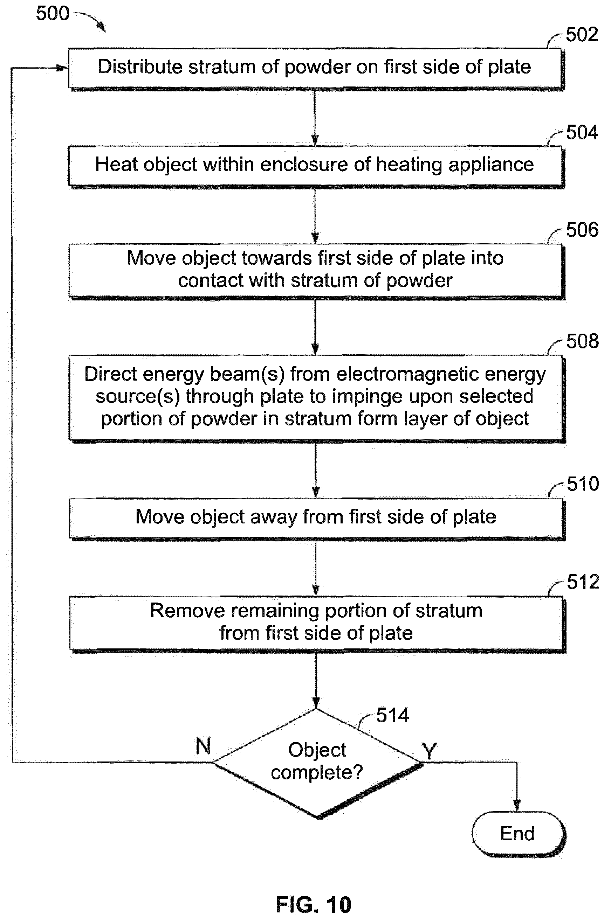

Figure 10 is a flow chart of a method 500 for additive manufacturing according to an embodiment of the present disclosure. The method 500 may be performed in whole or at least in part by the one or more processors 154 of the control unit 108 shown in Figure 1. Referring to Figures 1-9, the method 500 begins at 502, at which a stratum 202 of powder 116 is deposited and distributed on a first side 126 of a plate 102 that is transparent or at least semitransparent. The powder 116 includes metal particles. The powder 116 may be distributed on the plate 102 by moving a spreader 110 across the first side 126 of the plate 102 to disperse the powder 116 into the stratum 202. The stratum 202 may have a uniform thickness. For example, the thickness of the stratum 202 may be less than 100 µm.

At 504, an object 118 is heated within an enclosure 130 of a heating appliance 112. The heating appliance 112 may be an oven or a furnace. The object 118 within the enclosure 130 is an incomplete manufactured part or work piece that being formed via additive manufacturing. The object 118 is heated to raise the temperature of the object 118 above a temperature of the ambient surrounding environment. The object 118 within the enclosure 130 may be coupled to a build support device 104 that holds the object 118 between the build support device 104 and the plate 102.

At 506, the object 118 is moved towards the first side 126 of the plate 102 such that the object 118 makes contact with the stratum 202 of powder 116. For example, the object 118 may be moved by the build support device 104, which includes a linear drive mechanism 142. The object 118 optionally may remain within the enclosure 130 during the movement towards the plate 102 and while the object 118 engages the stratum 202.

At 508, one or more energy beams 304 are directed from one or more electromagnetic energy sources 106 towards the plate 102 and the stratum 202 of powder 116 thereon. The one or more electromagnetic energy sources 106 are disposed along an opposite side of the plate 102 from the stratum 202. The one or more energy beams 304 penetrate through the plate 102 and impinge upon the powder 116 in a selected portion 310 of the stratum 202 upon exiting the plate 102. The energy beams 304 melt and/or fuse the powder 116 in the selected portion 310, causing the melted powder 116 to adhere to a distal end 152 of the object 118 which forms a (new) layer 312 of the object 118. The melted powder 116 may adhere to the object 118 via surface tension (e.g., capillarity) and/or chemical bonding. The selected portion 310 may be based on a computer design model, and the energy beams 304 are directed to the selected portion 310 by controlling adjustable optics associated with the electromagnetic energy sources 106, such as lenses, mirrors, and the like.

In at least one embodiment, the AM system 100 is oriented such that the first side 126 of the plate 102 generally faces vertically upward, and the stratum 202 of powder 116 is retained on the first side 126 via gravitational force. The one or more electromagnetic energy sources 106 are disposed below a second or bottom side 128 of the plate 102, such that the plate is between the electromagnetic energy sources 106 and the powder 116.

At 510, the object 118 is moved away from the first side 126 of the plate 102, such that the object 118 is spaced apart from the powder 116 that remains in the stratum 202. The object 118 may be moved by controlling the build support device 104 to lift the object 118 off of (e.g., above) the remaining powder 116 in the stratum 202. The portion of the melted powder 116 that adhered to the object 118 to form the layer 312 remains on the object 118 and is separated from the stratum 202 when the object 118 is moved away from the plate 102. At 512, the remaining portion 314 of the powder 116 in the stratum 202 optionally may be removed from the plate 102 after the object 118 is moved away from the plate 102. For example, the removed powder may be discarded or collected for reuse. The removal of the remaining portion 314 is optional because an additional quantity of powder 116 may be added to the remaining portion 314 on the plate 102 to form a subsequent, second stratum 402 that is used to apply a subsequent layer onto the object 118.

At 514, a determination is made whether or not the object 118 that is being manufactured is complete. The determination may be resolved with reference to programmed instructions, such as a computer design model, associated with the object 118. If the object 118 is not complete after the addition of the layer 312, then flow of the method 500 returns to 502 to apply a subsequent layer onto the layer 312 of the object 118. For example, upon returning to 502, an additional quantity of powder 116 is distributed onto the first side 126 of the plate 102 to form a second stratum 402. The powder 116 in a second stratum 402 may be the same type of powder or a different type of powder than the powder 116 in the first stratum 202. If, on the other hand, it is determined that the object 118 is complete and requires no additional layers, then the method 500 may end. Optionally, the method 500 may start again to produce another object that is the same as or different than the preceding object 118.

Further, the disclosure comprises embodiments according to the following clauses:
Clause 1: An additive manufacturing system comprising: a plate that is at least semitransparent; a build support device configured to couple to an object, the build support device movable relative to the plate to move the object into and out of contact with a stratum of a powder distributed on a first side of the plate, wherein the powder includes metal particles; at least one electromagnetic energy source; and one or more processors operably connected to the at least one electromagnetic energy source and configured to control the at least one electromagnetic energy source to emit one or more energy beams that penetrate through the plate and impinge upon a selected portion of the powder in the stratum upon exiting the plate to form a layer of the object.
Clause 2: The system of clause 1, further comprising a heating appliance including an enclosure that surrounds the object and at least a portion of the build support device.
Clause 3. The system of clause 1 or 2, wherein the heating appliance is configured to heat the object to maintain the object at a designated temperature or temperature range.
Clause 4. The system of any of the preceding clauses, wherein the plate is disposed between the object and the at least one electromagnetic energy source.
Clause 5. The system of any of the preceding clauses, further comprising a spreader disposed along the first side of the plate and movable across the plate to disperse the powder to form the stratum with a designated thickness.
Clause 6. The system of clause 5, wherein the one or more processors are operably connected to the spreader and are configured to control the spreader to move across the plate to disperse the powder while the build support device holds the object in a separated position away from the plate such that the spreader passes between the object and the plate.
Clause 7. The system of any of the preceding clauses, wherein the one or more processors are operably connected to the build support device and are configured to control the build support device to hold the object in contact with the stratum during emission of the one or more energy beams and to move the object away from the plate after the emission of the one or more energy beams such that the layer of the object that is formed is spaced apart from a remaining portion of the powder in the stratum.
Clause 8. The system of any of the preceding clauses, wherein the powder includes non-metallic particles in addition to the metal particles.
Clause 9. The system of any of the preceding clauses, wherein the first side of the plate on which the stratum of the powder is distributed is a top side of the plate and the stratum is retained on the top side via gravitational force, the at least one electromagnetic energy source being disposed below a bottom side of the plate that is opposite the top side.
Clause 10. The system of any of the preceding clauses, wherein the at least one electromagnetic energy source comprises a laser beam generator or an electron beam generator.
Clause 11. The system of any of the preceding clauses, wherein the plate includes a single crystal sapphire material.
Clause 12. A method for additive manufacturing comprising: distributing a first stratum of a powder on a first side of a plate, wherein the powder includes metal particles and the plate is at least semitransparent; moving an object towards the first side of the plate into contact with the first stratum of the powder; and directing one or more energy beams from at least one electromagnetic energy source to penetrate through the plate and impinge upon a first selected portion of the powder in the first stratum upon exiting the plate to form a first layer of the object.
Clause 13. The method of clause 12, wherein the distributing of the first stratum comprises moving a spreader across the first side of the plate to disperse the powder.
Clause 14. The method of clause 12 or 13, further comprising heating the object within an enclosure of a heating appliance while the object is moved towards the first side of the plate and while the object contacts the first stratum of the powder on the plate.
Clause 15. The method of any of clauses 12 to 14, wherein the first side of the plate on which the first stratum of the powder is distributed is a top side of the plate and the first stratum is retained on the top side via gravitational force, the at least one electromagnetic energy source being disposed below a bottom side of the plate that is opposite the top side.
Clause 16. The method of any of clauses 12 to 15, further comprising moving the object away from the first side of the plate after the directing of the one or more energy beams through the plate such that the first layer of the object is spaced apart from a remaining portion of the powder in the first stratum.
Clause 17. The method of clause 16, wherein, subsequent to moving the object away from the first side of the plate, the method further comprises removing the remaining portion of the powder in the first stratum from the first side of the plate.
Clause 18. The method of clause 16, wherein, subsequent to moving the object away from the first side of the plate, the method further comprises distributing a second stratum of the powder or a different powder on the first side of the plate, and moving the object towards the first side of the plate such that the first layer of the object contacts the second stratum.
Clause 19. The method of any of clauses 12 to 18, further comprising coupling the object to a build support device such that the object is suspended between the build support device and the plate, and wherein the object is moved relative to the plate via actuating a linear drive mechanism of the build support device.
Clause 20. An additive manufacturing system comprising: a plate that is at least semitransparent; a powder including metal particles, the powder deposited on a top side of the plate; a heating appliance mounted above the top side of the plate, the heating appliance including an enclosure that surrounds an object that is movable relative to the plate to heat the object; a spreader mounted above the top side of the plate and movable across the plate to disperse the powder into a stratum having a designated thickness; and at least one electromagnetic energy source disposed below a bottom side of the plate that is opposite the top side, the at least one electromagnetic energy source configured to emit one or more energy beams towards the plate such that the one or more energy beams penetrate through the plate and impinge upon a selected portion of the powder in the stratum upon exiting the plate to melt the selected portion of the powder and form a layer on the object when the object is held in contact with the stratum.

While various spatial and directional terms, such as top, bottom, lower, mid, lateral, horizontal, vertical, front and the like may be used to describe embodiments of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

The diagrams of embodiments herein may illustrate one or more control or processing units, such as the control unit 108 shown in Figure 1. It is to be understood that the control or processing units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. The hardware may include electronic circuits that include and/or are connected to one or more logic-based devices, such as microprocessors, processors, controllers, or the like. Optionally, the control unit 108, or the one or more processors 154 thereof, may represent processing circuitry such as one or more of a field programmable gate array (FPGA), application specific integrated circuit (ASIC), microprocessor(s), a quantum computing device, and/or the like. The circuits in various embodiments may be configured to execute one or more algorithms to perform functions described herein. The one or more algorithms may include aspects of embodiments disclosed herein, whether or not expressly identified in a flowchart or a method.

As used herein, the term "control unit," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. The control unit 108 shown in Figure 1 is configured to execute a set of instructions that are stored in one or more storage elements (such as one or more memories), in order to process data. The set of instructions may include various commands that instruct the control unit 108 (e.g., the processor(s) 154 thereof) as a processing machine to perform specific operations such as the methods and processes of the various embodiments of the subject matter described herein. The set of instructions may be in the form of a software program. The processing of input data by the processing machine may be in response to user commands, or in response to results of previous processing, or in response to a request made by another processing machine. As used herein, the term "software" includes any computer program stored in memory for execution by a computer, including but not limited to RAM memory, ROM memory, EPROM memory, EEPROM memory, and non-volatile RAM (NVRAM) memory.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are example embodiments. Many other embodiments will be apparent to those of ordinary skill in the art upon reviewing the above description. The scope of the various embodiments of the disclosure should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims, and may include other examples that occur to those of ordinary skill in the art. Such other examples are intended to be within the scope of the claims if the examples have structural elements that do not differ from the literal language of the claims, or if the examples include equivalent structural elements with insubstantial differences from the literal language of the claims.

## Claims

1. An additive manufacturing system (100) comprising:
a plate (102) that is at least semitransparent;
a build support device (104) configured to couple to an object (118), the build support device (104) movable relative to the plate (102) to move the object (118) into and out of contact with a stratum (202) of a powder (116) distributed on a first side (126) of the plate (102), wherein the powder (116) includes metal particles;
at least one electromagnetic energy source (106); and
one or more processors (154) operably connected to the at least one electromagnetic energy source (106) and configured to control the at least one electromagnetic energy source (106) to emit one or more energy beams (304) that penetrate through the plate (102) and impinge upon a selected portion (310, 410) of the powder (116) in the stratum (202) upon exiting the plate (102) to form a layer (312) of the object (118).

2. The system of claim 1, further comprising a heating appliance (112) including an enclosure (130) that surrounds the object (118) and at least a portion of the build support device (104), wherein the heating appliance (112) is configured to heat the object (118) to maintain the object (118) at a designated temperature or temperature range.

3. The system of any of the preceding claims, wherein the plate (102) is disposed between the object (118) and the at least one electromagnetic energy source (106).

4. The system of any of the preceding claims, further comprising a spreader (110) disposed along the first side (126) of the plate (102) and movable across the plate (102) to disperse the powder (116) to form the stratum (202) with a designated thickness, wherein the one or more processors (154) are operably connected to the spreader (110) and are configured to control the spreader (110) to move across the plate (102) to disperse the powder (116) while the build support device (104) holds the object (118) in a separated position away from the plate (102) such that the spreader (110) passes between the object (118) and the plate (102).

5. The system of any of the preceding claims, wherein the one or more processors (154) are operably connected to the build support device (104) and are configured to control the build support device (104) to hold the object (118) in contact with the stratum (202) during emission of the one or more energy beams (304) and to move the object (118) away from the plate (102) after the emission of the one or more energy beams (304) such that the layer (312) of the object (118) that is formed is spaced apart from a remaining portion (314) of the powder (116) in the stratum (202).

6. The system of any of the preceding claims, wherein the first side (126) of the plate (102) on which the stratum (202) of the powder (116) is distributed is a top side (126) of the plate (102) and the stratum (202) is retained on the top side (126) via gravitational force, the at least one electromagnetic energy source (106) being disposed below a bottom side (128) of the plate (102) that is opposite the top side (126).

7. The system of any of the preceding claims, wherein the plate (102) includes a single crystal sapphire material.

8. A method (500) for additive manufacturing comprising:
distributing a first stratum (202) of a powder (116) on a first side (126) of a plate (102), wherein the powder (116) includes metal particles and the plate (102) is at least semitransparent;
moving an object (118) towards the first side (126) of the plate (102) into contact with the first stratum (202) of the powder (116); and
directing one or more energy beams (304) from at least one electromagnetic energy source (106) to penetrate through the plate (102) and impinge upon a first selected portion (310, 410) of the powder (116) in the first stratum (202) upon exiting the plate (102) to form a first layer (312) of the object (118).

9. The method (500) of claim 8, wherein the distributing of the first stratum (202) comprises moving a spreader (110) across the first side (126) of the plate (102) to disperse the powder (116).

10. The method (500) of claim 8 or 9, further comprising heating the object (118) within an enclosure (130) of a heating appliance (112) while the object (118) is moved towards the first side (126) of the plate (102) and while the object (118) contacts the first stratum (202) of the powder (116) on the plate (102).

11. The method (500) of any of claims 8 to 10, wherein the first side (126) of the plate (102) on which the first stratum (202) of the powder (116) is distributed is a top side (126) of the plate (102) and the first stratum (202) is retained on the top side (126) via gravitational force, the at least one electromagnetic energy source (106) being disposed below a bottom side (128) of the plate (102) that is opposite the top side (126).

12. The method (500) of any of claims 8 to 11, further comprising moving the object (118) away from the first side (126) of the plate (102) after the directing of the one or more energy beams (304) through the plate (102) such that the first layer (312) of the object (118) is spaced apart from a remaining portion (314) of the powder (116) in the first stratum (202).

13. The method (500) of claim 12, wherein, subsequent to moving the object (118) away from the first side (126) of the plate (102), the method (500) further comprises removing the remaining portion (314) of the powder (116) in the first stratum (202) from the first side (126) of the plate (102).

14. The method (500) of claim 12, wherein, subsequent to moving the object (118) away from the first side (126) of the plate (102), the method (500) further comprises distributing a second stratum (202) (402) of the powder (116) or a different powder (116) on the first side (126) of the plate (102), and moving the object (118) towards the first side (126) of the plate (102) such that the first layer (312) of the object (118) contacts the second stratum (202) (402).

15. The method (500) of any of claims 8 to 14, further comprising coupling the object (118) to a build support device (104) such that the object (118) is suspended between the build support device (104) and the plate (102), and wherein the object (118) is moved relative to the plate (102) via actuating a linear drive mechanism (142) of the build support device (104).
